(19) Europäisches Patentamt
European Patent Office
Office européen des brevets

(11) EP 3 433 330 B1

(12) **EUROPÄISCHE PATENTSCHRIFT**

(45) Veröffentlichungstag und Bekanntmachung des Hinweises auf die Patenterteilung:
**13.12.2023 Patentblatt 2023/50**

(21) Anmeldenummer: **17712777.6**

(22) Anmeldetag: **22.03.2017**

(51) Internationale Patentklassifikation (IPC):
***C09J 7/21*** *(2018.01)*

(52) Gemeinsame Patentklassifikation (CPC):
**C09J 7/21;** C09J 2203/302; C09J 2400/263; C09J 2433/00

(86) Internationale Anmeldenummer:
**PCT/EP2017/056821**

(87) Internationale Veröffentlichungsnummer:
**WO 2017/162737 (28.09.2017 Gazette 2017/39)**

(54) **KLEBEBAND ZUM UMMANTELN VON LANGGESTRECKTEM GUT WIE INSBESONDERE KABELSÄTZEN UND VERFAHREN ZUR UMMANTELUNG**

ADHESIVE TAPE FOR SHEATING LONGITUDINALLY EXTENDED PRODUCTS SUCH AS PARTICULARLY CABLES SETS AND SHEATHING METHOD

BANDE ADHÉSIVE POUR ENROBER DES PRODUITS ALLONGÉS, COMME EN PARTICULIER DES ENSEMBLES DE CABLES ET PROCÉDÉ D’ ENROBAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.03.2016 DE 102016204898**

(43) Veröffentlichungstag der Anmeldung:
**30.01.2019 Patentblatt 2019/05**

(73) Patentinhaber: **tesa SE**
**22848 Norderstedt (DE)**

(72) Erfinder:
- **HÄNLE, Mark**
  **22339 Hamburg (DE)**
- **KEREP, Patrick**
  **22767 Hamburg (DE)**
- **BERBER, Feryal**
  **22297 Hamburg (DE)**
- **SCHMIEDEL, Georg**
  **22303 Hamburg (DE)**
- **MARANGOS, David**
  **21107 Hamburg (DE)**

(74) Vertreter: **tesa SE**
**Hugo-Kirchberg-Straße 1**
**22848 Norderstedt (DE)**

(56) Entgegenhaltungen:

| | |
|---|---|
| **EP-A1- 2 500 389** | **EP-A1- 2 520 628** |
| **EP-A1- 2 522 705** | **EP-A1- 2 695 926** |
| **WO-A1-2015/189326** | **JP-A- 2015 209 446** |

EP 3 433 330 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung bezieht sich auf ein Klebeband zum Ummanteln von langgestrecktem Gut wie insbesondere Kabelsätzen in Automobilen und Verfahren zur Ummantelung.

Seit langem finden in der Industrie Klebebänder zur Herstellung von Kabelbäumen Verwendung. Dabei dienen die Klebebänder zum Bündeln einer Vielzahl von elektrischen Leitungen vor dem Einbau oder in bereits montiertem Zustand, um den Raumbedarf des Leitungsbündels durch Bandagieren zu reduzieren sowie zusätzlich Schutzfunktionen zu erzielen.

Die Prüfung und Klassifizierung von Klebebändern für die Kabelummantelung erfolgt in der Automobilindustrie nach umfangreichen Normenwerken wie zum Beispiel der LV 312-1 "Schutzsysteme für Leitungssätze in Kraftfahrzeugen, Klebebänder; Prüfrichtlinie" (10/2009) als gemeinsame Norm der Firmen Daimler, Audi, BMW und Volkswagen oder der Ford-Spezifikation ES-XU5T-1 A303-aa (Revision 09/2009) "Harness Tape Performance Specification). Im Folgenden werden diese Normen verkürzt mit LV 312 beziehungsweise mit Ford-Spezifikation bezeichnet.

Die Geräuschdämpfung, die Abriebbeständigkeit sowie die Temperaturbeständigkeit eines Klebebandes werden anhand definierter Prüfaufbauten und Prüfverfahren bestimmt, wie sie ausführlich in der LV 312 beschrieben sind.

Kabelwickelbänder sind mit Folien- und Textilträger verbreitet, die in der Regel einseitig mit unterschiedlichen Haftklebemassen beschichtet sind.

Neben einer Reihe an Anforderungen, wie Chemikalienverträglichkeit, hohe Klebkraft, Verträglichkeit mit wechselnden Untergründen, die an Klebebänder gestellt werden, müsse in der Automobilindustrie zudem unebene, ungleichmäßige Untergründe durch die Kabelstränge, Wellrohre und Abzweigungen zuverlässig verklebt werden. Dazu kommen noch Biege- und Zugbeanspruchung bei der Herstellung, dem Einbau und der späteren Nutzung im Motorraum eines Automobils oder auch in der Karosserie mit ständiger Biegebeanspruchung beim Öffnen von Türen.

Da das Ende des Klebebandes im Idealfall auf der eigenen Rückseite verklebt wird, muss eine gute Sofortklebkraft (Tack) auf diesem Untergrund vorhanden sein, damit nicht zu Beginn ein Abflaggen des Klebebandes auftritt. Um dauerhaft ein Flagging freies Produkt zu gewährleisten, müssen die Verankerung auf dem Untergrund und die innere Festigkeit der Klebemasse soweit ausgeprägt sein, dass die Klebeverbindung auch unter dem Einfluss von Spannung (Zug- und Biegebeanspruchung) Bestand hat.

Beim Wickeln eines Kabelsatzes wird das Klebeband von gar nicht bis vollständig überlappend um das Kabel verklebt, das im Regelfall einen kleinen Radius hat, so dass das Klebeband sehr stark gekrümmt wird. Am Ende eines Wickelabschnittes wird üblicherweise das Band vorwiegend auf die eigene Rückseite gewickelt, so dass der Überlappungsgrad nahezu vollständig ist, ähnlich der üblichen Darreichungsform als Klebebandrolle, wo die Klebemasse ebenfalls auf der eigenen Rückseite verklebt ist. Beim Abflaggen wirken statische Kräfte zum Beispiel durch die Biegesteifigkeit des Trägers und die Wickelspannung, die dazu führen können, dass sich die offenen Klebebandenden in unerwünschter Weise aufstellen, ähnlich einer beginnenden selbsttätigen Abwicklung. Die Abflaggresistenz ist also die Fähigkeit der Klebmasse, dieser statischen Kraft zu widerstehen.

Unter Flagging wird - bei einem um einen Körper gewickelten Klebeband - die Neigung eines Klebebandendes abzustehen verstanden. Die Ursache ergibt sich aus der Kombination von Haltekraft durch den Klebstoff, der Steifigkeit des Trägers und des Durchmessers des Kabelsatzes.

Der Nachweis der Flaggingbeständigkeit von Wire Harnessing (WH)-Kabelwickelbändern wird über die TFT-Methode (Threshold Flagging Time) geführt. Als Zielgröße für ein einwandfrei flaggingfreies Gewebeprodukt wird dabei ein Grenzwert von deutlich über 1000 min TFT, vorzugsweise über 2000 min TFT, definiert.

Eine alternative Methode stellt die SWAT-Methode dar, wie sie unten erklärt wird.

Das Klebeband soll die Leitungen gegen Schäden durch Abrasion zum Beispiel an scharfen Kanten schützen. Daher werden insbesondere entsprechend robuste Trägermaterialien eingesetzt. Die Klebebänder werden daher entsprechend der LV 312 in die Abrasionsklassen A bis E einklassifiziert.

Die Kabelisolierung darf nicht durch den Einfluss des Klebebandes in Kombination mit erhöhter Temperatur über längeren Zeitraum verspröden. Unterschieden wird hier unter anderem nach der LV 312 unter anderem zwischen vier Temperaturklassen T1 bis T4, entsprechend 80 °C (auch Temperaturklasse A genannt), 105 °C (auch Temperaturklasse B(105) genannt), 125 °C (auch Temperaturklasse C genannt) und 150 °C (auch Temperaturklasse D genannt), denen die umwickelten Kabel ohne Versprödung über 3000 h standhalten müssen. Es versteht sich von selbst, dass die Temperaturklassen T3 und T4 höhere Ansprüche an das Klebeband stellen als die unteren Klassen T1 und T2. Über die Einstufung T1 bis T4 entscheidet sowohl das Kabelisolierungsmaterial, als auch Haftklebemasse und Trägertyp.

Kabelwickelbänder mit Haftklebemassen auf Basis von Naturkautschuk zeigen zumeist eine gute Abflaggresistenz, weisen jedoch eine über die Lagerzeit, und vor allem bei zunehmenden Temperaturen ansteigende Abrollkraft auf. Zudem erfüllen sie nur die unteren Temperaturklassen für die Kabelverträglichkeit.

Ähnlich verhalten sich Klebebänder auf Basis von Synthesekautschuken (Styrolblockcopolymere) wie SBS/SIS. Selbst die hydrierten Typen sind in der Temperaturklasse beschränkt.

Weiterhin findet man Kabelwickelbänder mit Haftklebemassen auf Basis von UVvernetzbaren Polyacrylsäureestern. Diese erfüllen die hohen Temperaturklassen, neigen aber zum Abflaggen.

Die Realisierung von leicht abrollbaren Klebebändern (zur Kabelbandagierung) unter gleichzeitiger Beibehaltung guter klebtechnischer Eigenschaften stellt eine große Herausforderung dar, weil beide Eigenschaften sich auszuschließen scheinen, denn die wesentlichen Kriterien bei einseitig klebenden Kabelwickelbändern, angepasste Abrollkraft und ausreichend hohe Klebkraft, stehen dabei in krassem Gegensatz zueinander. Während für gute Klebkraftwerte und ein damit verbundenes geringes Flaggingpotential ein gutes Auffließ- und Verankerungsverhalten der Haftklebemasse vorausgesetzt wird, sind diese Kriterien für ein angenehmes Abrollverhalten eher hinderlich.

Die EP 2 520 628 A1 offenbart ein Klebeband mit einem Träger und mit einer auf mindestens einer Seite des Trägers aufgebrachten Haftklebemasse in Form einer getrockneten Polymerdispersion, wobei das Polymer aufgebaut ist aus:

(a) 40 bis 90 Gew.-% n-Butylacrylat und/oder 2-Ethylhexylacrylat
(b) 0 bis 10 Gew.-% eines ethylenisch ungesättigten Monomers mit einer Säure- oder Säureanhydridfunktion
(c) 60 bis 10 Gew.-% eines oder mehreren von (a) und (b) verschiedenen ethylenisch ungesättigten monofunktionellen Monomeren

Das Polymer umfasst bezüglich der Monomere a) und b) eine andere Monomerzusammensetzung als die erfindungsgemäße und enthält zusätzlich ein oder mehrere von (a) und (b) verschiedene ethylenisch ungesättigte monofunktionelle Monomere. Letzteres ist erfindungsgemäß ausgeschlossen.

Aus der EP 2 522 705 A1 ist ebenfalls ein Klebeband bekannt mit einem Träger und mit einer auf mindestens einer Seite des Trägers aufgebrachten Haftklebemasse in Form einer getrockneten Polymerdispersion, wobei das Polymer aufgebaut ist aus:

(a) 90 bis 99 Gew.-% n-Butylacrylat und/oder 2-Ethylhexylacrylat
(b) 0 bis 10 Gew.-% eines ethylenisch ungesättigten Monomers mit einer Säure- oder Säureanhydridfunktion
(c) 10 bis 1 Gew.-% eines oder mehreren von (a) und (b) verschiedenen ethylenisch ungesättigten monofunktionellen Monomeren

Das Polymer enthält also zusätzlich ein oder mehrere von (a) und (b) verschiedene ethylenisch ungesättigte monofunktionelle Monomere. Dies ist erfindungsgemäß ausgeschlossen.

Die JP 2015 209 446 A beschreibt eine Haftklebemasse in Form einer getrockneten Polymerdispersion, bei der das Polymer aufgebaut ist aus:

(a) 95 Gew.-% n-Butylacrylat
(b) 5 Gew.-% Acrylsäure

Der vorliegenden Erfindung liegt die Aufgabe zugrunde, ein Klebeband zur Verfügung zu stellen, das trotz leichter Abwickelbarkeit eine gute Abflaggresistenz hat und zugleich eine Kabelverträglichkeit über alle vier genannten Temperaturklassen T1 bis T4 aufweist und das das besonders einfache, preiswerte und schnelle Ummanteln von langgestrecktem Gut wie Kabelsätzen in Automobilen ermöglicht.

Gelöst wird diese Aufgabe durch ein Klebeband, wie es im Hauptanspruch niedergelegt ist. Gegenstand der Unteransprüche sind dabei vorteilhafte Weiterbildungen des Klebebands und Verfahren zur Anwendung des Klebebands.

Demgemäß betrifft die Erfindung ein Klebeband insbesondere zum Umwickeln von Kabeln, bestehend aus einem textilen Träger und aus einer auf mindestens einer Seite des Trägers aufgebrachten Haftklebemasse in Form einer getrockneten Polymerdispersion, wobei das Polymer besteht aus:

(a) 98,0 bis 99,0 Gew.-% n-Butylacrylat und/oder 2-Ethylhexylacrylat
(b) 1,0 bis 2,0 Gew.-% eines ethylenisch ungesättigten Monomers mit einer Säure- oder Säureanhydridfunktion

Neben den aufgeführten Acrylatpolymeren können der Haftklebemasse neben gegebenenfalls vorhandenen Restmonomeren zusätzlich die weiter unten erwähnten Klebrigmacher und/oder Zuschlagstoffe wie Lichtschutz- oder Alterungsschutzmitteln in den ebenfalls unten genannten Mengen zugesetzt werden.

Insbesondere sind keine weiteren Polymere wie Elastomere in der Haftklebemasse enthalten, das heißt, die Polymere der Haftklebemasse bestehen nur aus den Monomeren (a) und (b) in den angegebenen Mengenverhältnissen.

Bevorzugt bildet n-Butylacrylat das Monomer (a).

Als Monomer (b) kommen vorteilhaft in Betracht zum Beispiel Acrylsäure, Methacrylsäure, Itaconsäure, Maleinsäure, Fumarsäure und/oder Maleinsäureanhydrid.

Bevorzugt ist (Meth-)acrylsäure der Formel I,

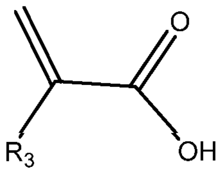

(I)

wobei $R^3$ = H oder $CH_3$ ist, bevorzugt wird gegebenenfalls die Mischung aus Acrylsäure oder Methacrylsäure verwendet. Besonders bevorzugt ist Acrylsäure.

Gemäß einer besonders bevorzugten Variante weist das Polymer die folgende Zusammensetzung auf:

(a) 98,0 bis 99,0 Gew.-% n-Butylacrylat und
(b) 1,0 bis 2,0 Gew.-% Acrylsäure

Die Polymerdispersion wird hergestellt durch das Verfahren der Emulsionspolymerisation der genannten Komponenten. Beschreibungen dieses Verfahrens sind zum Beispiel zu finden in "Emulsion Polymerization and Emulsion Polymers" von Peter A. Lovell and Mohamed S. El-Aasser - Wiley-VCH 1997 - ISBN 0-471-96746-7 oder in EP 1 378 527 B1.

Bei der Polymerisation ist es nicht auszuschließen, dass nicht alle Monomere zu Polymeren umgesetzt werden. Dabei ist es naheliegend, dass der Restmonomergehalt möglichst klein sein soll.

Bevorzugt werden Klebemassen umfassend die Polymerdispersion mit einem Restmonomerengehalt von kleiner gleich 1 Gew.-%, insbesondere kleiner gleich 0,5 Gew.-% (bezogen auf die Masse der getrockneten Polymerdispersion) bereitgestellt.

Die Klebemasse ist eine Haftklebemasse, also eine Klebemasse, die bereits unter relativ schwachem Andruck eine dauerhafte Verbindung mit fast allen Haftgründen erlaubt und nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Zur Erzielung haftklebriger Eigenschaften muss sich die Klebmasse bei der Verarbeitungstemperatur oberhalb ihrer Glastemperatur befinden, um viskoelastische Eigenschaften zu haben. Da die Kabelsatzwicklung bei normaler Umgebungstemperatur (ungefähr zwischen 15°C bis 25 °C) erfolgt, liegt die Glasübergangstemperatur der Haftklebemasseformulierung bevorzugt unterhalb von +15 °C (ermittelt mit DSC (Differential Scanning Calorimetry) gemäß DIN 53 765 bei einer Aufheizrate von 10 K/min).

Die Glasübergangstemperatur der Acrylatcopolymere lässt sich gemäß der Gleichung von Fox aus den Glasübergangstemperaturen der Homopolymere und ihren relativen Mengenverhältnissen abschätzen).

Zur Erzielung von Polymeren, beispielsweise Haftklebemassen oder Heißsiegelmassen, mit gewünschten Glasübergangstemperaturen wird die mengenmäßige Zusammensetzung der Monomermischung vorteilhaft derart gewählt, dass sich nach einer Gleichung (G1) in Analogie zur ***Fox***-Gleichung (vergleiche T.G. Fox, Bull. Am. Phys. Soc. 1956, 1, 123) der gewünschte $T_G$-Wert für das Polymer ergibt.

$$\frac{1}{T_G} = \sum_n \frac{w_n}{T_{G,n}} \qquad \text{(G1)}$$

Durch den eventuellen Zusatz von Klebrigmachern erhöht sich die Glasübergangstemperatur zwangsläufig, je nach Zugabemenge, Verträglichkeit und Erweichungstemperatur um ca. 5 bis 40 K.

Es sind daher Acrylatcopolymere mit einer Glasübergangstemperatur von höchstens 0 °C bevorzugt.

Die erfindungsgemäßen Polymere weisen nach ASTM D3330 eine Klebkraft auf Stahl von mindestens 1,0 N/cm auf (bei einem Flächengewicht der Klebmasse von 30 $g/m^2$ auf einer 23 $\mu m$ Polyesterfolie als Träger).

Unter einem "Klebharz" wird entsprechend dem allgemeinem Fachmannverständnis ein oligomeres oder polymeres Harz verstanden, das die Autoadhäsion (den Tack, die Eigenklebrigkeit) der Haftklebemasse im Vergleich zu der keinen Klebharz enthaltenden, ansonsten aber identischen Haftklebemasse erhöht.

Der Einsatz von Klebrigmachern zur Steigerung der Klebkräfte von Haftklebemassen ist grundsätzlich bekannt. Dieser Effekt stellt sich auch ein, wenn der Klebmasse bis zu 15 Gewichtsteile (entspricht < 15 Gewichtsteile), beziehungsweise 5 bis 15 Gewichtsteile Klebrigmacher (bezogen auf die Masse der getrockneten Polymerdispersion) hinzugefügt werden. Bevorzugt werden 5 bis 12, weiter bevorzugt 6 bis 10 Gewichtsteile Klebrigmacher (bezogen auf die Masse der getrockneten Polymerdispersion) hinzugefügt.

Als Klebrigmacher, auch als Klebharze bezeichnet, sind prinzipiell alle bekannten Stoffklassen geeignet. Klebrigmacher sind beispielsweise Kohlenwasserstoffharze (zum Beispiel Polymere auf Basis ungesättigter $C_5$- oder $C_9$-Monomere), Terpenphenolharze, Polyterpenharze auf Basis von Rohstoffen wie zum Beispiel $\alpha$- oder $\beta$-Pinen, aromatische Harze wie Cumaron-Inden-Harze oder Harze auf Basis Styrol oder $\alpha$-Methylstyrol wie Kolophonium und seine Folgeprodukte, zum Beispiel disproportioniertes, dimerisiertes oder verestertes Kolophonium, zum Beispiel Umsetzungsprodukte mit Glycol, Glycerin oder Pentaerythrit, um nur einige zu nennen. Bevorzugt werden Harze ohne leicht oxidierbare Doppelbindungen wie Terpenphenolharze, aromatische Harze und besonders bevorzugt Harze, die durch Hydrierung hergestellt sind wie zum Beispiel hydrierte Aromatenharze, hydrierte Polycyclopentadienharze, hydrierte Kolophoniumderivate oder hydrierte Polyterpenharze.

Bevorzugt sind Harze auf Basis von Terpenphenolen und Kolophoniumestern. Ebenfalls bevorzugt sind Klebharze mit einem Erweichungspunkt oberhalb von 80 °C gemäß ASTM E28-99 (2009). Besonders bevorzugt sind Harze auf Basis von Terpenphenolen und Kolophoniumestern mit einem Erweichungspunkt oberhalb von 90 °C gemäß ASTM E28-99 (2009). Die Harze werden zweckmäßigerweise in Dispersionsform eingesetzt. Sie lassen sich so problemlos mit der Polymerdispersion feinverteilt mischen.

Besonders bevorzugt ist die Variante der Erfindung, bei der der Haftklebemasse keinerlei Klebharze zugesetzt sind.

Für den Fachmann überraschend und nicht vorhersehbar führt das Fehlen von Klebharzen beim erfindungsgemäßen Klebeband nicht - wie der Fachmann erwartet hätte - zu einer unzureichenden Klebkraft. Darüber hinaus ist auch das Flaggingverhalten überraschenderweise nicht schlechter.

Insbesondere nicht zugesetzt werden der Haftklebemasse die folgenden Substanzen:

- Kohlenwasserstoffharze (zum Beispiel Polymere auf Basis ungesättigter $C_5$- oder $C_9$-Monomere)
- Terpenphenolharze
- Polyterpenharze auf Basis von Rohstoffen wie zum Beispiel $\alpha$- oder $\beta$-Pinen
- aromatische Harze wie Cumaron-Inden-Harze oder Harze auf Basis Styrol oder $\alpha$-Methylstyrol wie Kolophonium und seine Folgeprodukte, zum Beispiel disproportioniertes, dimerisiertes oder verestertes Kolophonium, zum Beispiel Umsetzungsprodukte mit Glycol, Glycerin oder Pentaerythrit

Zur weiteren Verbesserung der Kabelverträglichkeit kann die Klebmasseformulierung optional mit Lichtschutz- oder primären und/oder sekundären Alterungsschutzmitteln abgemischt sein.

Als Alterungsschutzmittel können Produkte auf Basis sterisch gehinderter Phenole, Phosphite, Thiosynergisten, sterisch gehinderter Amine oder UV-Absorber eingesetzt werden.

Bevorzugt eingesetzt werden primäre Antioxidantien wie zum Beispiel Irganox 1010 oder Irganox 254, allein oder in Kombination mit sekundären Antioxidantien wie zum Beispiel Irgafos TNPP oder Irgafos 168.

Die Alterungsschutzmittel können dabei in beliebiger Kombination miteinander verwendet werden, wobei Mischungen aus primären und sekundären Antioxidantien in Kombination mit Lichtschutzmitteln wie zum Beispiel Tinuvin 213 besonders gute Alterungsschutzwirkung zeigen.

Ganz besonders vorteilhaft haben sich Alterungsschutzmittel erwiesen, in denen ein primäres Antioxidans mit einem sekundären Antioxidans in einem Molekül vereint ist. Bei diesen Alterungsschutzmitteln handelt es sich um Kresolderivate, deren aromatischer Ring an zwei beliebigen unterschiedlichen Stellen, bevorzugt in ortho- und meta-Stellung zur OH-Gruppe mit Thioalkylketten substituiert ist, wobei das Schwefelatom auch über eine oder mehrere Alkylketten an dem aromatischen Ring des Kresolbausteins verbunden sein kann. Die Anzahl der Kohlenstoffatome zwischen dem Aromaten und dem Schwefelatom kann zwischen 1 und 10, bevorzugt zwischen 1 und 4 liegen. Die Anzahl der Kohlenstoffatome der Alkylseitenkette kann zwischen 1 und 25, bevorzugt zwischen 6 und 16 liegen. Besonders bevorzugt sind hierbei Verbindungen des Typs 4,6-Bis(dodecylthiomethyl)-o-cresol, 4,6-Bis(undecylthiomethyl)-o-cresol, 4,6-Bis(decylthiomethyl)-o-cresol 4,6-Bis(nonylthiomethyl)-o-cresol oder 4,6-Bis(octylthiomethyl)-o-cresol. Derartige Alterungsschutzmittel werden zum Beispiel von der Firm Ciba Geigy unter dem Namen Irganox 1726 oder Irganox 1520 angeboten.

Die Menge des zugesetzten Alterungsschutzmittels beziehungsweise Alterungsschutzmittelpaketes sollte in einem Bereich zwischen 0,1 und 10 Gewichtsteilen bezogen auf die Masse der getrockneten Polymerdispersion, bevorzugt in einem Bereich zwischen 0,2 und 5 Gewichtsteilen bezogen auf die Masse der getrockneten Polymerdispersion, besonders bevorzugt in einem Bereich zwischen 0,5 und 3 Gewichtsteilen bezogen auf die Masse der getrockneten Polymerdispersion liegen.

Bevorzugt ist die Darreichungsform in Form einer Dispersion zur besonders einfachen Mischbarkeit mit der Klebmassedispersion. Alternativ können flüssige Alterungsschutzmittel auch direkt in die Dispersion eingearbeitet werden, wobei sich an den Einarbeitungsschritt noch eine Standzeit über einige Stunden anschließen sollte, um die homogene Verteilung in der Dispersion oder die Aufnahme des Alterungsschutzmittels in die Dispersionspartikel zu ermöglichen. Eine weitere Alternative ist die Zugabe einer organischen Lösung der Alterungsschutzmittel in die Dispersion.

Geeignete Konzentrationen liegen im Bereich von 0,1 bis zu 8, vorzugsweise 0,1 bis 5 Gewichtsteilen bezogen auf die Masse der getrockneten Polymerdispersion.

Zur Verbesserung der Verarbeitungseigenschaften kann die Klebmasseformulierung weiterhin mit üblichen Prozesshilfsmitteln wie Rheologieadditiven (Verdicker), Entschäumern, Entlüftern, Netzmitteln oder Verlaufsmitteln abgemischt sein. Geeignete Konzentrationen liegen im Bereich von 0,1 bis zu 5 Gewichtsteilen bezogen auf die Masse der getrockneten Polymerdispersion.

Grundsätzlich unterscheidet man zwischen organischen und anorganischen Rheologieadditiven.

Die organischen Verdicker spalten sich wiederum in zwei wesentliche Wirkprinzipien auf: (i) die Verdickung der wässrigen Phase, also nicht assoziierend, und (ii) Assoziatbildung zwischen Verdickermolekül und Partikeln, zum Teil unter Einbeziehung der Stabilisatoren (Emulgatoren). Vertreter der ersten (i) Stoffgruppe sind wasserlösliche Polyacrylsäuren und Polycoacrylsäuren, die im basischen Medium Polyelektrolyte mit großem hydrodynamischem Volumen bilden. Der Fachmann bezeichnet diese auch kurz als ASE (alkali swellable emulsion). Sie zeichnen sich durch hohe Ruhescherviskositäten und starke Scherverdünnung aus. Eine andere Stoffklasse sind die modifizierten Polysaccharide, insbesondere Celluloseether wie Carboxymethylcellulose, 2-Hydroxyethylcellulose, Carboxymethyl-2-hydroxyethylcellulose, Methylcellulose, 2-Hydroxyethylmethylcellulose, 2-Hydroxyethylethylcellulose, 2-Hydroxypropylcellulose, 2-Hydroxypropylmethylcellulose, 2-Hydroxybutylmethylcellulose. Zusätzlich zählen zu dieser Stoffklasse weniger verbreitete Polysaccharide wie Stärkederivate und spezielle Polyether.

Die Wirkgruppe der (ii) Assoziativverdicker sind im Prinzip Blockcopolymere mit einem wasserlöslichen Mittelblock und hydrophoben Endblöcken, wobei die Endblöcke mit den Partikeln oder sich selbst wechselwirken und dadurch ein Raumnetz unter Einbeziehung der Partikel bilden. Typische Vertreter sind dem Fachmann als HASE (hydrophobically modified alkali swellable emulsion), HEUR (hydrophobically modified ethyleneoxide urethane) oder HMHEC (hydrophobically modified hydroxyethyl cellulose) geläufig. Bei den HASE-Verdickern ist der Mittelblock ein ASE, die Endblöcke sind zumeist über Polyethylenoxidbrücken angekoppelte lange, hydrophobe Alkylketten. Bei den HEUR ist der wasserlösliche Mittelblock ein Polyurethan, beim HMHEC eine 2-Hydroxyethylcellulose. Besonders die nicht-ionischen HEUR und HMHEC sind weitgehend pH unempfindlich.

Je nach Struktur bewirken die Assoziativverdicker mehr oder weniger ein newtonsches (scherratenunabhängiges) oder pseudoplastisches (scherverflüssigendes) Fließverhalten. Mitunter zeigen sie auch einen thixotropen Charakter, das heißt, sie zeigen neben einer Scherkraftabhängigkeit der Viskosität auch eine Zeitabhängigkeit.

Die anorganischen Verdicker sind zumeist Schichtsilikate natürlichen oder synthetischen Ursprungs, Beispiele sind Hektorite und Smektite. Im Kontakt mit Wasser lösen sich die einzelnen Schichten voneinander. Durch unterschiedliche Ladungen an Flächen und Rändern der Plättchen bilden sie in Ruhe eine raumerfüllende Kartenhausstruktur aus, woraus hohe Ruhescherviskositäten bis hin zu Fließgrenzen resultieren. Bei Scherung bricht die Kartenhausstruktur zusammen und es ist ein deutlicher Abfall der Scherviskosität zu beobachten. Je nach Ladung, Konzentration und geometrischen Dimensionen der Plättchen kann der Strukturaufbau einige Zeit in Anspruch nehmen, so dass mit solchen anorganischen Verdickern auch Thixotropie erzielt werden kann.

Die Verdicker lassen sich teilweise direkt in die Klebstoffdispersion einrühren oder werden teilweise zuvor vorteilhaft in Wasser vorverdünnt beziehungsweise vordispergiert. Anbieter von Verdickern sind zum Beispiel OMG Borchers, Omya, Byk Chemie, Dow Chemical Company, Evonik, Rockwood oder Münzing Chemie.

Füllstoffe (verstärkend oder nicht verstärkend) wie Siliciumdioxide (sphärisch, nadelförmig, plättchenförmig oder unregelmäßig wie die pyrogenen Silicas), Glas als Voll- oder Hohlkugeln, Mikroballons, Kalziumcarbonate, Zinkoxide, Titandioxide, Aluminiumoxide oder Aluminiumoxidhydroxide können sowohl der Justierung der Verarbeitbarkeit als auch der klebtechnischen Eigenschaften dienen. Geeignete Konzentrationen liegen im Bereich von 0,1 bis zu 20 Gewichtsteilen bezogen auf die Masse der getrockneten Polymerdispersion.

In einer bevorzugten Ausführungsform hat die erfindungsgemäße Klebmasseformulierung nach ASTM D3330 eine Klebkraft auf Stahl von mindestens 2,0 N/cm (bei einem Flächengewicht der Klebmasse von ca. 100 g/m$^2$ auf Polyestergewebe als Träger gemäß dem Beispiel).

Als Träger eignen sich textile Träger und besonders bevorzugt Gewebe, insbesondere Polyestergewebe.

Als Trägermaterial für das Klebeband können alle bekannten textilen Träger wie Gestricke, Gelege, Bänder, Geflechte, Nadelflortextilien, Filze, Gewebe (umfassend Leinwand-, Köper und Atlasbindung), Gewirke (umfassend Kettenwirkware und Strickware) oder Vliese verwendet werden, wobei unter "Vlies" zumindest textile Flächengebilde gemäß EN 29092 (1988) sowie Nähwirkvliese und ähnliche Systeme zu verstehen sind.

Ebenfalls können Abstandsgewebe und -gewirke mit Kaschierung verwendet werden. Derartige Abstandsgewebe werden in der EP 0 071 212 B1 offenbart. Abstandsgewebe sind mattenförmige Schichtkörper mit einer Deckschicht aus einem Faser- oder Filamentvlies, einer Unterlagsschicht und zwischen diesen Schichten vorhandene einzelne oder Büschel von Haltefasern, die über die Fläche des Schichtkörpers verteilt durch die Partikelschicht hindurch genadelt sind und die Deckschicht und die Unterlagsschicht untereinander verbinden. Als zusätzliches, aber nicht erforderliches Merkmal sind gemäß EP 0 071 212 B1 in den Haltefasern Partikel aus inertem Gestein, wie zum Beispiel Sand, Kies oder dergleichen, vorhanden.

Die durch die Partikelschicht hindurch genadelten Haltefasern halten die Deckschicht und die Unterlagsschicht in einem Abstand voneinander und sie sind mit der Deckschicht und der Unterlagsschicht verbunden.

Als Vliesstoffe kommen besonders verfestigte Stapelfaservliese, jedoch auch Filament-, Meltblown- sowie Spinnvliese in Frage, die meist zusätzlich zu verfestigen sind. Als mögliche Verfestigungsmethoden sind für Vliese die mechanische, die thermische sowie die chemische Verfestigung bekannt. Werden bei mechanischen Verfestigungen die Fasern meist durch Verwirbelung der Einzelfasern, durch Vermaschung von Faserbündeln oder durch Einnähen von zusätzlichen Fäden rein mechanisch zusammengehalten, so lassen sich durch thermische als auch durch chemische Verfahren adhäsive (mit Bindemittel) oder kohäsive (bindemittelfrei) Faser-Faser-Bindungen erzielen. Diese lassen sich bei geeigneter Rezeptierung und Prozessführung ausschließlich oder zumindest überwiegend auf Faserknotenpunkte beschränken, so dass unter Erhalt der lockeren, offenen Struktur im Vlies trotzdem ein stabiles, dreidimensionales Netzwerk gebildet wird.

Besonders vorteilhaft haben sich Vliese erwiesen, die insbesondere durch ein Übernähen mit separaten Fäden oder durch ein Vermaschen verfestigt sind.

Derartige verfestigte Vliese werden beispielsweise auf Nähwirkmaschinen des Typs "Malimo" der Firma Karl Mayer, ehemals Malimo, hergestellt und sind unter anderem bei der Firma Techtex GmbH beziehbar. Ein Malivlies ist dadurch gekennzeichnet, dass ein Querfaservlies durch die Bildung von Maschen aus Fasern des Vlieses verfestigt wird.

Als Träger kann weiterhin ein Vlies vom Typ Kunit oder Multiknit verwendet werden. Ein Kunitvlies ist dadurch gekennzeichnet, dass es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Malimo" der Firma Karl Mayer schon seit längerer Zeit hergestellt. Ein weiteres kennzeichnendes Merkmal dieses Vlieses besteht darin, dass es als Längsfaservlies in Längsrichtung hohe Zugkräfte aufnehmen kann. Ein Multiknitvlies ist gegenüber dem Kunitvlies dadurch gekennzeichnet, dass das Vlies durch das beidseitige Durchstechen mit Nadeln sowohl auf der Ober- als auch auf der Unterseite eine Verfestigung erfährt. Als Ausgangsprodukt für ein Multiknit dienen in der Regel ein beziehungsweise zwei nach dem Kunit-Verfahren hergestellte einseitig vermaschte Polfaser-Vlieswirkstoffe. Im Endprodukt sind beide Vliesstoffoberseiten durch Faservermaschungen zu einer geschlossenen Oberfläche geformt und durch nahezu senkrecht stehende Fasern miteinander verbunden. Die zusätzliche Einbringbarkeit weiterer durchstechbarer Flächengebilde und/oder streufähiger Medien ist gegeben. Schließlich sind auch Nähvliese als Vorprodukt geeignet, eine erfindungsgemäße Eindeckung und ein erfindungsgemäßes Klebeband zu bilden. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Malimo" der Firma Karl Mayer bekannt.

Besonders geeignet sind auch Nadelvliese. Beim Nadelvlies wird ein Faserflor zu einem Flächengebilde mit Hilfe von mit Widerhaken versehenen Nadeln. Durch wechselndes Einstechen und Ausziehen der Nadeln wird das Material auf einem Nadelbalken verfestigt, wobei sich die Einzelfasern zu einem festen Flächengebilde verschlingen. Die Anzahl und Ausführungsform der Vernadelungspunkte (Nadelform, Eindringtiefe, beidseitiges Vernadeln) entscheiden über Stärke und Festigkeit der Fasergebilde, die in der Regel leicht, luftdurchlässig und elastisch sind.

Weiterhin besonders vorteilhaft ist ein Stapelfaservlies, das im ersten Schritt durch mechanische Bearbeitung vorverfestigt wird oder das ein Nassvlies ist, das hydrodynamisch gelegt wurde, wobei zwischen 2 Gew.-% und 50 Gew.-% der Fasern des Vlieses Schmelzfasern sind, insbesondere zwischen 5 Gew.-% und 40 Gew.-% der Fasern des Vlieses.

Ein derartiges Vlies ist dadurch gekennzeichnet, dass die Fasern nass gelegt werden oder zum Beispiel ein Stapelfaservlies durch die Bildung von Maschen aus Fasern des Vlieses durch Nadelung, Vernähung, Luft- und/oder Wasserstrahlbearbeitung vorverfestigt wird. In einem zweiten Schritt erfolgt die Thermofixierung, wobei die Festigkeit des Vlieses durch das Auf- oder Anschmelzen der Schmelzfasern nochmals erhöht wird.

Für die erfindungsgemäße Nutzung von Vliesen ist besonders die adhäsive Verfestigung von mechanisch vorverfestigten oder nassgelegten Vliesen von Interesse, wobei diese über Zugabe von Bindemittel in fester, flüssiger, geschäumter oder pastöser Form erfolgen kann. Prinzipielle Darreichungsformen sind vielfältig möglich, zum Beispiel feste Bindemittel als Pulver zum Einrieseln, als Folie oder als Gitternetz oder in Form von Bindefasern. Flüssige Bindemittel sind gelöst in Wasser oder organischen Lösemitteln oder als Dispersion applizierbar. Überwiegend werden zur adhäsiven Verfestigung Bindedispersionen gewählt: Duroplasten in Form von Phenol- oder Melaminharzdispersionen, Elastomere als Dispersionen natürlicher oder synthetischer Kautschuke oder meist Dispersionen von Thermoplasten wie Acrylate, Vinylacetate, Polyurethane, Styrol-Butadien-Systeme, PVC u.ä. sowie deren Copolymere. Im Normalfall handelt es sich dabei um anionische oder nicht-ionogen stabilisierte Dispersionen, in besonderen Fällen können aber auch kationische Dispersionen von Vorteil sein.

Die Art des Bindemittelauftrages kann gemäß dem Stand der Technik erfolgen und ist beispielsweise in Standardwerken der Beschichtung oder der Vliestechnik wie "Vliesstoffe" (Georg Thieme Verlag, Stuttgart, 1982) oder "Textiltechnik-Vliesstofferzeugung" (Arbeitgeberkreis Gesamttextil, Eschborn, 1996) nachzulesen.

Für mechanisch vorverfestigte Vliese, die bereits eine ausreichende Verbundfestigkeit aufweisen, bietet sich

der einseitige Sprühauftrag eines Bindemittels an, um Oberflächeneigenschaften gezielt zu verändern.

Neben dem sparsamen Umgang mit dem Bindemittel wird bei derartiger Arbeitsweise auch der Energiebedarf zur Trocknung deutlich reduziert. Da keine Abquetschwalzen benötigt werden und die Dispersionen vorwiegend in dem oberen Bereich des Vliesstoffes verbleiben, kann eine unerwünschte Verhärtung und Versteifung des Vlieses weitgehend verhindert werden.

Für eine ausreichende adhäsive Verfestigung des Vliesträgers ist im allgemeinen Bindemittel in der Größenordnung von 1 % bis 50 %, insbesondere 3 % bis 20 %, bezogen auf das Gewicht des Faservlieses, zuzugeben.

Die Zugabe des Bindemittels kann bereits bei der Vliesherstellung, bei der mechanischen Vorverfestigung oder aber in einem gesonderten Prozessschritt erfolgen, wobei dieser inline oder off-line durchgeführt werden kann. Nach der Bindemittelzugabe muss temporär für das Bindemittel ein Zustand erzeugt werden, in dem dieses klebend wird und adhäsiv die Fasern verbindet - dies kann während der Trocknung zum Beispiel von Dispersionen, aber auch durch Erwärmung erreicht werden, wobei über flächige oder partielle Druckanwendung weitere Variationsmöglichkeiten gegeben sind. Die Aktivierung des Bindemittels kann in bekannten Trockenkanälen, bei geeigneter Bindemittelauswahl aber auch mittels Infrarotstrahlung, UV-Strahlung, Ultraschall, Hochfrequenzstrahlung oder dergleichen erfolgen. Für die spätere Endanwendung ist es sinnvoll, aber nicht zwingend notwendig, dass das Bindemittel nach Ende des Vlies-Herstellprozesses seine Klebrigkeit verloren hat. Vorteilhaft ist, dass durch thermische Behandlung flüchtige Komponenten wie Faserhilfsstoffe entfernt werden und somit ein Vlies mit günstigen Foggingwerten entsteht, so dass bei Einsatz einer foggingarmen Klebemasse ein Klebeband mit besonders günstigen Foggingwerten produziert werden kann, ebenso zeigt somit auch die Eindeckung einen sehr geringen Foggingwert.

Unter Fogging (siehe DIN 75201 A) wird der Effekt verstanden, dass bei ungünstigen Verhältnissen niedermolekulare Verbindungen aus den Klebebändern ausgasen können und an kalten Teilen kondensieren. Dadurch kann beispielsweise die Sicht durch die Windschutzscheibe beeinträchtigt werden.

Eine weitere Sonderform der adhäsiven Verfestigung besteht darin, dass die Aktivierung des Bindemittels durch Anlösen oder Anquellen erfolgt. Prinzipiell können hierbei auch die Fasern selbst oder zugemischte Spezialfasern die Funktion des Bindemittels übernehmen. Da für die meisten polymeren Fasern derartige Lösemittel jedoch aus Umweltgesichtspunkten bedenklich beziehungsweise problematisch in ihrer Handhabung sind, wird dieses Verfahren eher selten angewandt.

Vorteilhaft und zumindest bereichsweise kann der Träger eine ein- oder beidseitig glattgeschliffene Oberfläche aufweisen, vorzugsweise jeweils eine vollflächig glattgeschliffene Oberfläche. Die glattgeschliffene Oberfläche mag gechintzt sein, wie es beispielsweise in der EP 1 448 744 A1 im Detail erläutert wird.

Des Weiteren kann der Träger zur Verdichtung in einem Walzwerk kalandert werden. Vorzugsweise laufen die beiden Walzen gegenläufig und mit der gleichen Umfangsgeschwindigkeit, so dass der Träger gepresst und verdichtet wird.

Wenn die Umfangsgeschwindigkeit der Walzen differiert, dann wird der Träger zusätzlich glattgeschliffen.

Der Träger ist vorzugsweise ein Gewebe, weiter vorzugsweise ein Polyestergewebe.

Besonders bevorzugte Gewebe sind wie folgt aufgebaut:

- die Fadenzahl in der Kette 10 bis 60/cm beträgt
- die Fadenzahl im Schuss 10 bis 40/cm beträgt
- die Kettfäden ein Garngewicht zwischen 40 und 400 dtex, insbesondere zwischen 44 und 330 dtex, besonders bevorzugt von 167 dtex besitzen
- die Schussfäden ein Garngewicht zwischen 40 und 660 dtex, insbesondere zwischen 44 und 400 dtex, besonders bevorzugt von 167 dtex besitzen

Gemäß einer weiteren vorteilhaften Ausführungsform der Erfindung beträgt die Fadenzahl in der Kette 40 bis 50/cm, vorzugsweise 44/cm.

Gemäß einer weiteren vorteilhaften Ausführungsform der Erfindung beträgt die Fadenzahl im Schuss 18 bis 22/cm, vorzugsweise 20/cm.

Gemäß einer weiteren vorteilhaften Ausführungsform der Erfindung handelt es sich bei dem Gewebe um ein Polyestergewebe. Weitere Möglichkeiten sind Polyamidgewebe, Viskosegewebe und/oder ein Mischgewebe aus den genannten Materialien.

Weiter bevorzugt beträgt die Dicke des Gewebes maximal 300 $\mu$m, besonders bevorzugt 170 bis 230 $\mu$m, ganz besonders bevorzugt 190 bis 210 $\mu$m.

Der Träger weist gemäß einer weiteren vorteilhaften Ausführungsform der Erfindung ein Flächengewicht von bis zu 200 g/m$^2$ auf, bevorzugt 100 bis 150 g/m$^2$.

Als Ausgangsmaterialien für das Trägermaterial für das Klebeband sind insbesondere (Chemie)Fasern (Stapelfaser oder Endlosfilament) aus synthetischen Polymeren, auch synthetische Fasern genannt, aus Polyester, Polyamid, Polyimid, Aramid, Polyolefin, Polyacrylnitril oder Glas, (Chemie)Fasern aus natürlichen Polymeren wie zellulosische

Fasern (Viskose, Modal, Lyocell, Cupro, Acetat, Triacetat, Cellulon), wie Gummifasern, wie Pflanzeneiweißfasern und/oder wie Tiereiweißfasern und/oder natürliche Fasern aus Baumwolle, Sisal, Flachs, Seide, Hanf, Leinen, Kokos oder Wolle vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung des Trägers eingesetzt werden.

Des Weiteren sind Garne, gefertigt aus den angegebenen Fasern, ebenfalls geeignet.

Bei Geweben oder Gelegen können einzelne Fäden aus einem Mischgarn hergestellt werden, also synthetische und natürliche Bestandteile aufweisen. In der Regel sind die Kettfäden und die Schussfäden jedoch jeweils sortenrein ausgebildet.

Die Kettfäden und/oder die Schussfäden können dabei jeweils nur aus synthetischen Fäden oder nur aus Fäden aus natürlichen Rohstoffen bestehen, also sortenrein sein.

Die Garne oder Fäden der Gewebe können als Filamente vorliegen. Im Sinne dieser Erfindung wird unter einem Filament ein Bündel paralleler, gerader Einzelfasern/Einzelfilamente verstanden, in der Literatur auch oft als Multifilament bezeichnet. Gegebenenfalls kann dieses Faserbündel durch Verdrehen in sich verfestigt werden, dann spricht man von gesponnenen oder gezwirnten Filamenten. Alternativ kann das Faserbündel durch Verwirbeln mit Druckluft oder Wasserstrahl in sich verfestigt werden. Im Weiteren wird für alle diese Ausführungsformen verallgemeinernd nur noch der Begriff Filament verwendet.

Das Filament kann texturiert oder glatt und punktverfestigt oder unverfestigt vorliegen.

Schließlich kann das Klebeband ein Abdeckmaterial aufweisen, mit dem bis zum Gebrauch die eine oder die zwei Klebemasseschichten eingedeckt sind. Als Abdeckmaterialien eignen sich auch alle oben ausführlich aufgeführten Materialien.

Bevorzugt wird ein nicht-fusselndes Material eingesetzt wie eine Kunststofffolie oder ein gut verleimtes, langfaseriges Papier.

Ist eine Schwerentflammbarkeit des beschriebenen Klebebands erwünscht, lässt sich diese erzielen, indem dem Träger und/oder der Klebemasse Flammschutzmittel zugesetzt werden. Diese können bromorganische Verbindungen sein, bei Bedarf mit Synergisten wie Antimontrioxid, wobei jedoch in Hinblick auf die Halogenfreiheit des Klebebandes roter Phosphor, phosphororganische, mineralische oder intumeszierende Verbindungen wie Ammoniumpolyphosphat allein oder in Verbindung mit Synergisten bevorzugt Verwendung finden.

Der Klebmasseauftrag, bezogen auf die Klebebandfläche, liegt bevorzugt zwischen 40 und 160 g/m$^2$, vorzugsweise zwischen 60 und 130 g/m$^2$, weiter vorzugsweise zwischen 80 und 100 g/m$^2$ liegt.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Das Klebeband weist somit eine Längsausdehnung und eine Breitenausdehnung auf. Das Klebeband weist auch eine senkrecht zu beiden Ausdehnungen verlaufende Dicke auf, wobei die Breitenausdehnung und Längsausdehnung um ein Vielfaches größer sind als die Dicke. Die Dicke ist über die gesamte durch Länge und Breite bestimmte Flächenausdehnung des Klebebands möglichst gleich, vorzugsweise exakt gleich.

Das Klebeband liegt insbesondere in Bahnform vor. Unter einer Bahn wird ein Objekt verstanden, dessen Länge um ein Vielfaches größer ist als die Breite und die Breite entlang der gesamten Länge in etwa vorzugsweise genau gleich bleibend ausgebildet ist.

Das Klebeband kann in Form einer Rolle, also in Form einer archimedischen Spirale auf sich selbst aufgerollt, hergestellt werden.

Auf der Rückseite des Klebebandes kann ein Rückseitenlack aufgetragen sein, um die Abrolleigenschaften des zur archimedischen Spirale gewickelten Klebebandes günstig zu beeinflussen. Dieser Rückseitenlack kann dazu mit Silikon- oder Fluorsilikonverbindungen sowie mit Polyvinylstearylcarbamat, Polyethyleniminstearylcarbamid oder fluororganischen Verbindungen als abhäsiv wirkende Stoffe ausgerüstet sein.

Die Klebemasse kann in Längsrichtung des Klebebands in Form eines Streifens aufgebracht sein, der eine geringere Breite aufweist als der Träger des Klebebands.

Je nach Verwendungsfall können auch mehrere parallele Streifen des Klebers auf dem Trägermaterial beschichtet sein.

Die Lage des Streifens auf dem Träger ist frei wählbar, wobei eine Anordnung direkt an einer der Kanten des Trägers bevorzugt wird.

Bevorzugt ist die Klebemasse vollflächig auf dem Träger aufgetragen.

Auf der Klebebeschichtung des Trägers kann zumindest ein Streifen einer Eindeckung vorgesehen sein, der oder die sich in Längsrichtung des Klebebands erstrecken und der oder die zwischen 20 % und 90 % der Klebebeschichtung abdecken.

Bevorzugt deckt der Streifen insgesamt zwischen 50 % und 80 % der Klebebeschichtung ab. Der Abdeckungsgrad ist gewählt in Abhängigkeit von der Anwendung und von dem Durchmesser des Kabelsatzes.

Die angegebenen Prozentzahlen beziehen sich auf die Breite der Streifen der Eindeckung in Bezug auf die Breite des Trägers.

Gemäß einer bevorzugten Ausführungsform der Erfindung ist genau ein Streifen der Eindeckung auf der Klebebeschichtung vorhanden.

Die Lage des Streifens auf der Klebebeschichtung ist frei wählbar, wobei eine Anordnung direkt an einer der Längskanten des Trägers bevorzugt wird. Auf diese Weise ergibt sich ein in Längsrichtung des Klebebands erstreckender Klebestreifen, der mit der anderen Längskante des Trägers abschließt.

Wird das Klebeband zur Ummantelung eines Kabelbaums eingesetzt, indem das Klebeband in einer schraubenlinienförmigen Bewegung um den Kabelbaum geführt wird, kann die Umhüllung des Kabelbaums so erfolgen, dass die Klebemasse des Klebebands nur auf dem Klebeband selbst verklebt wird, während das Gut mit keinem Kleber in Berührung kommt.

Der so ummantelte Kabelbaum weist aufgrund der fehlenden Fixierung der Kabel durch irgendeinen Kleber eine sehr hohe Flexibilität auf. Damit ist seine Biegefähigkeit beim Einbau - gerade auch in engen Durchgängen oder scharfen Abbiegungen - deutlich erhöht.

Falls eine gewisse Fixierung des Klebebands auf dem Gut gewünscht wird, kann die Ummantelung derartig erfolgen, dass der Klebestreifen zu einem Teil auf dem Klebeband selbst und zu einem anderen Teil auf dem Gut verklebt wird.

Gemäß einer anderen vorteilhaften Ausführungsform ist der Streifen mittig auf der Klebebeschichtung aufgebracht, so dass sich zwei an den Längskanten des Trägers in Längsrichtung des Klebebands erstreckende Klebestreifen ergeben.

Für das sichere und wirtschaftliche Aufbringen des Klebebands in besagter schraubenlinienförmiger Bewegung um den Kabelbaum und gegen das Verrutschen der sich ergebenden Schutzumhüllung sind die zwei jeweils an den Längskanten des Klebebands vorhandenen Klebestreifen vorteilhaft, insbesondere wenn einer, der meist schmaler als der zweite Streifen ist, als Fixierungshilfe dient und der zweite, breitere Streifen als Verschluss dient. Auf diese Weise ist das Klebeband so auf dem Kabel verklebt, dass der Kabelsatz gegen Verrutschen gesichert und dennoch flexibel gestaltet ist.

Daneben gibt es Ausführungsformen, bei denen mehr als ein Streifen der Eindeckung auf der Klebebeschichtung aufgebracht sind. Wenn lediglich von einem Streifen die Rede ist, liest der Fachmann in Gedanken mit, dass durchaus auch mehrere Streifen gleichzeitig die Klebebeschichtung eindecken können.

Der Herstellprozess des erfindungsgemäßen Klebebandes erschöpft sich in der Beschichtung des Trägers direkt mit der Dispersion in einem oder mehreren nacheinander durchgeführten Arbeitsgängen. Es kann das unbehandelte Textil direkt oder im Transferverfahren beschichtet werden.

Als Auftragsaggregate werden die üblichen eingesetzt: Drahtrakel, Streichbalken, Walzenauftrag, Düsenbeschichtung, Doppelkammerrakel, Mehrfachkaskadendüse.

Aufgrund der geschilderten positiven Eigenschaften lässt sich das Klebeband hervorragend zum Isolieren und Wickeln von Drähten oder Kabeln verwenden.

Des Weiteren ist es vorteilhaft zum Ummanteln von langgestrecktem Gut wie insbesondere Kabelsätze in Kraftfahrzeugen geeignet, wobei das Klebeband in einer Schraubenlinie um das langgestreckte Gut geführt oder das langgestreckte Gut in axialer Richtung von dem Band umhüllt werden kann.

Schließlich umfasst der Erfindungsgedanke auch ein langgestrecktes Gut, ummantelt mit einem erfindungsgemäßen Klebeband. Vorzugsweise handelt es sich bei dem langgestreckten Gut um einen Kabelsatz.

Aufgrund der hervorragenden Eignung des Klebebandes kann es in einer Ummantelung Verwendung finden, die aus einer Eindeckung besteht, bei der zumindest in einem Kantenbereich der Eindeckung das selbstklebend ausgerüstete Klebeband vorhanden ist, das so auf der Eindeckung verklebt ist, dass sich das Klebeband über eine der Längskanten der Eindeckung erstreckt, und zwar vorzugsweise in einem im Vergleich zur Breite der Eindeckung schmalen Kantenbereich.

Ein derartiges Produkt sowie optimierte Ausführungsformen desselben werden in der EP 1 312 097 A1 offenbart. In der EP 1 300 452 A2, der DE 102 29 527 A1 sowie der WO 2006 108 871 A1 werden Weiterentwicklungen dargestellt, für die das erfindungsgemäße Klebeband ebenfalls sehr gut geeignet ist. Ebenso kann das erfindungsgemäße Klebeband in einem Verfahren Verwendung finden, wie es die EP 1 367 608 A2 offenbart. Schließlich beschreiben die EP 1 315 781 A1 sowie die DE 103 29 994 A1 Ausführungsformen von Klebebändern, wie sie auch für das erfindungsgemäße Klebeband möglich sind.

Weiter vorzugsweise zerstört das Klebeband bei Verklebung auf Kabeln mit PVC-Ummantelung und auf Kabeln mit Polyolefin-Ummantelung dieselbigen nicht, wenn ein Verbund aus Kabeln und Klebeband gemäß der LV 312 bei Temperaturen über 100 °C und bis zu 3000 h gelagert und anschließend die Kabel um einen Dorn gebogen werden.

Das erfindungsgemäße Klebeband eignet sich hervorragend für das Umwickeln von Kabeln, lässt sich für eine einfache Verarbeitung leicht abwickeln, zeigt kein oder nur geringfügiges Abflaggen und zeigt keine Kabelversprödung auch bei den hohen Temperaturklassen T3 und T4 über 3000 h.

Im Folgenden soll das Klebeband anhand mehrerer Figuren näher erläutert werden, ohne damit eine wie auch immer geartete Einschränkung hervorrufen zu wollen.
Es zeigen

Figur 1 das Klebeband im seitlichen Schnitt,

Figur 2 einen Ausschnitt eines Kabelbaums, der sich aus einer Bündelung von einzelnen Kabeln zusammensetzt und der mit dem erfindungsgemäßen Klebeband ummantelt ist, und

Figur 3 eine vorteilhafte Anwendung des Klebebands.

In der Figur 1 ist im Schnitt in Querrichtung (Querschnitt) das Klebeband gezeigt, das aus einem Gewebeträger 1 besteht, auf den einseitig eine Schicht einer selbstklebenden Beschichtung 2 auf Basis einer Acrylatdispersion aufgebracht ist.
Die Klebemasse ist zu 20 % in den Träger eingesunken, was eine optimale Verankerung bewirkt und gleichzeitig die Handeinreißbarkeit des Trägers verbessert.
In der Figur 2 ist ein Ausschnitt eines Kabelbaums gezeigt, der sich aus einer Bündelung von einzelnen Kabeln 7 zusammensetzt und der mit dem erfindungsgemäßen Klebeband 11 ummantelt ist. Das Klebeband wird in einer schraubenlinienförmigen Bewegung um den Kabelbaum geführt.
Der gezeigte Ausschnitt des Kabelbaums zeigt zwei Wicklungen I und II des Klebebands. Nach links hin würden sich weitere Wicklungen erstrecken, diese sind hier nicht dargestellt.
In einer weiteren Ausführungsform für eine Ummantelung werden zwei mit einer Klebemasse ausgerüstete erfindungsgemäße Bänder 60, 70 mit ihren Klebemassen versetzt (bevorzugt um jeweils 50 %) aufeinander laminiert, so dass sich ein Produkt ergibt, wie es in Figur 3 dargestellt ist.

## Beispiele

*Skizze der Beispiele*

Das erfindungsgemäße Klebeband wird nachfolgend in bevorzugter Ausführung anhand eines Beispiels beschrieben, ohne damit die Erfindung irgendeiner Beschränkung unterwerfen zu wollen.
Des Weiteren sind Vergleichsbeispiele aufgeführt, in denen untaugliche Klebebänder dargestellt sind.
Zur Erläuterung der Erfindung wurden Beispielklebebänder nach folgendem Schema hergestellt:
Die Haftklebstoffdispersionen wurden durch Einrühren eines Polyurethan Assoziativverdickers (Borchigel 0625, OMG Borchers) auf eine Viskosität von ca. 1000 Pa*s bei einer Schergeschwindigkeit von 0,01 $s^{-1}$ eingestellt (gemessen mit Kegel/Platte Geometrie im Rotationsmodus mit einem Rheometer DSR 200 N von Rheometric Scientific).
Mit einem Filmziehgerät wurde ein Polyestergewebe (Feinheit der Faser 167 dtex, Fadenzahl Kette 43 1/cm, Fadenzahl Schuss 25 1/cm) so mit der verdickten Beispielhaftklebstoffdispersion bestrichen, dass nach dem Trocknen in einem Umluftofen bei 85 °C über 5 Minuten ein Klebmasseflächengewicht von 90 $g/m^2$ resultierte.

## Beurteilungskriterien

Die Kriterien für ein anwendungsgerechtes Klebeband für die Umwicklung von Kabeln sind

- Abrollkraft von Rollen nach Lagerung bei 40 °C über 4 Wochen
- Abflaggresistenz gemäß dem SWAT-Test
- Kabelverträglichkeit nach LV 312 im Hinblick auf Versprödung und Verfärbung

## Durchführung der Tests

Die Messungen werden - soweit nicht ausdrücklich anders erwähnt - bei einem Prüfklima von 23 $\pm$ 1 °C und 50 $\pm$ 5 % rel. Luftfeuchte durchgeführt.

*Messung der Abrollkraft nach LV 312*

Dabei gilt ein Wert im Intervall von 3 bis 9 N/cm bei einer Abzugsgeschwindigkeit von 30 m/min als anwendungsgerecht. Werte von 3 bis 6 N/cm wird mit "2" bewertet. Werte von 6 bis 9 N/cm erhalten die Note "1", Werte außerhalb dieser Grenzen erhalten die Note 0.

*Messung der Abflaggresistenz nach der SWAT-Methode*

Der SWAT-Test wird genutzt, um das Flaggingverhalten von Klebebändern zu untersuchen, nachdem diese spiralförmig um ein Kabel gewickelt worden sind.

Der Test wird unter Normklima (23 ± 1 °C und 50 ± 5 % rel. Luftfeuchte) und 40 °C durchgeführt. Die erhöhte Temperatur simuliert die erschwerten Anforderungen während des Transports.

Für den Test wird ein 19 mm breites Klebeband verwendet. Dieses wird manuell um ein mit ETFE (Ethylen-Tetrafluorethylen) ummanteltes Kabel, das einen Durchmesser von 1 mm aufweist, viermal (1440°) ohne zusätzliche Druck gewickelt. Das Klebeband wird mit einer Schere geschnitten.

Es wird angenommen, dass eine durchschnittlich 5 mm lange Fahne verbleibt, wenn das Klebbandende nicht runtergepresst wird.

Insgesamt werden sieben Wicklungen um das Kabel erzeugt.

Es werden die Fahnen nach drei Tagen, zehn Tagen und 30 Tagen bei Normklima mit Hilfe eines Lineals vermessen. Dies zeigt die Figur 4. Der absolute Flaggingwert wird berechnet, indem von der tatsächlich gemessenen Länge der Fahne 5mm abgezogen werden.

In Figur 4 beträgt der Flaggingwert somit 23 mm (28 mm - 5 mm).

Der Flaggingwert, der als Ergebnis angegeben wird, ist das Ergebnis des Mittelwerts des Flaggingwerte der sieben Wicklungen. Analog wird der Test bei 40 °C in üblichen Trockenschränken durchgeführt.

Im Folgenden wird das erfindungsgemäße Klebeband bei 40 °C im Trockenschrank nach der angegebenen SWAT-Methode bewertet.

Dabei gilt ein Wert von ≤ 10 mm als unterer Grenzwert bei der Resistenz gegen Abflaggen. Mittelwerte < 5 erhalten die Note 2, Mittelwerte von 5 bis 10 erhalten die Note 1 und Mittelwerte > 10 erhalten die Note 0.

*Messung der Kabelverträglichkeit nach LV 312*

*Versprödung*

Dabei gilt ein Ausbleiben von Versprödung nach 3000 h bei 150 °C beim Biegen um einen Dorn mit Durchmesser 2 mm als kabelverträglich und wird mit der Note "2" bewertet. Versprödet die Probe, erhält das Muster die Note "0".

*Verfärbung*

Dabei gilt ein Ausbleiben von Verfärbungen oder das Auftreten marginaler Verfärbungen nach 3000 h bei 150 °C als sehr kabelverträglich und wird mit Note 2 bewertet. Deutlich sichtbare, aber nicht zu dunkle Verfärbungen können gegebenenfalls als ausreichend verträglich klassifiziert werden und erhalten die Note "1". Schwarze oder dunkelbraune Verfärbungen gelten als nicht kabelverträglich und erhalten die Note "0".

*Messung der Klebkraft*

Zur Messung der Klebkraft der reinen Dispersionen wurden zunächst Ausstriche der Klebmassen präpariert. Dazu wurden die Dispersionen auf eine PET-Folie (Polyethylenterephthalat) einer Dicke von 23 μm gegeben und mit einem Filmziehgerät so abgerakelt, dass nach dem Trocknen über 5 Minuten bei 105 °C in einem Umlufttrockenschrank ein Klebmasseflächengewicht von 30 g/$m^2$ resultierte.

Aus diesem Bogen wurden mit einem Cuttermesser Streifen von 20 mm Breite und 25 cm Länge herausgeschnitten.

Für die Messung der Klebkraft der Formulierungen mit Harz wurden wie oben beschrieben Ausstriche auf Polyestergewebe herangezogen und ebenfalls mit einem Cuttermesser in Streifen von 20 mm Breite und 25 cm Länge geschnitten.

Die Klebkraft auf Stahl wurde gemäß ASTM D3330 gemessen.

*Messung der Glasübergangstemperaturen*

Die Glasübergangstemperaturen wurden auf dem Dynamischen Differenzkalorimeter-Gerät DSC 204 F1 "Phönix" der Firma Netzsch, Deutschland, in 25 μl Aluminiumtiegeln mit gelochtem Deckel unter Stickstoffatmosphäre (20 ml/min Gasfluss) bestimmt. Die Probeneinwaage betrug 8 ± 1 mg. Die Proben wurden zweimal von -140 °C bis auf 200 °C mit einer Heizrate von 10 K/min vermessen. Ausgewertet wurde die 2. Aufheizkurve.

Die Methode lehnt sich an die DIN 53 765 an.

*Dynamische Viskositätsmessung*

Die Viskositätsmessung wird mit einem Rheometer des Typs DSR 200 N der Firma Rheometric Scientific bei Raumtemperatur und im Rotationsmodus bei einer Schergeschwindigkeit von $0,01 s^{-1}$ mit einem Kegel-Platte-System mit einem Durchmesser von 50 mm durchgeführt.

**Zusammensetzung der Beispielpolymerdispersionen**

Zur Verdeutlichung des Erfindungsgedankens wurden Polymerdispersionen mit folgender Comonomerzusammensetzung erprobt:

| Monomer | Polymer 1 | Polymer 2 | Polymer 3 |
|---|---|---|---|
| 2-Ethylhexylacrylat | 93 | 92 | |
| n-Butylacrylat | - | - | 99 |
| Acrylsäure | 4 | 2 | 1 |
| Acrylnitril | 3 | - | - |
| Methylmethacrylat | - | 6 | - |

| **Beispiele** | Polymer 1 | Polymer 2 | Polymer 3 | Kolophoniumesterharz Snowtack 100G, Lawter |
|---|---|---|---|---|
| B1 **(Vergleichsbeispiel 1)** | 100 Gew.-Teile | - | - | - |
| B2 **(Vergleichsbeispiel 2)** | - | 100 Gew.-Teile | - | - |
| B3 **(Beispiel 3)** | - | - | 100 Gew.-Teile | - |
| B4 **(Vergleichsbeispiel 4)** | 100 Gew- Teile | - | | 45 Gew.-Teile |

Im Folgenden sind die Prüfergebnisse der Beispiele B1 bis B4 dargestellt:

| | **(Vergleichs-)Beispiele** | | | |
|---|---|---|---|---|
| | **B1** | **B2** | **B3** | **B4** |
| **Abrollkraft** | 2 | 2 | 2 | 1 |
| **Abflaggresistenz** | 0 | 0 | 2 | 2 |
| **Kabelverträglichkeit: Versprödung** | 2 | 2 | 2 | 2 |
| **Kabelverträglichkeit: Verfärbung** | 1 | 1 | 2 | 0 |

Für ein anwendungsgerechtes Klebeband für die Kabelummantelung sind alle vier Prüfkriterien unabdingbar. Das Beispiel 3 zeigt ein Klebeband, das dem Erfindungsgedanken entspricht, die Vergleichsbeispiele hingegen sind untauglich.

Das Beispiel 3 zeichnet sich insbesondere dadurch aus, dass kein Klebharz verwendet worden ist.

Gegenüber den Beispielen 1 und 2 hebt sich das erfindungsgemäße Klebeband dadurch hervor, dass die Monomerzusammensetzung eine andere ist.

**Patentansprüche**

**1.** Klebeband insbesondere zum Umwickeln von Kabeln, bestehend aus einem textilen Träger und aus einer auf mindestens einer Seite des Trägers aufgebrachten Haftklebemasse in Form einer getrockneten Polymerdispersion, wobei das Polymer besteht aus:

(a) 98,0 bis 99,0 Gew.-% n-Butylacrylat und/oder 2-Ethylhexylacrylat
(b) 1,0 bis 2,0 Gew.-% eines ethylenisch ungesättigten Monomers mit einer Säure- oder Säureanhydridfunktion.

2. Klebeband nach Anspruch 1,
**dadurch gekennzeichnet, dass**
n-Butylacrylat Monomer (a) bildet.

3. Klebeband nach zumindest einem der vorherigen Ansprüche,
**dadurch gekennzeichnet, dass**
Acrylsäure, Methacrylsäure, Itaconsäure, Maleinsäure, Fumarsäure und/oder Maleinsäureanhydrid das Monomer (b) bilden, bevorzugt Acrylsäure oder Methacrylsäure oder die Mischung aus beiden.

4. Klebeband nach zumindest einem der vorherigen Ansprüche,
**dadurch gekennzeichnet, dass**
der Klebemasse bis zu 15 Gewichtsteile, beziehungsweise 5 bis 15 Gewichtsteile Klebrigmacher (bezogen auf die Masse der getrockneten Polymerdispersion) hinzugefügt werden, bevorzugt 5 bis 12, weiter bevorzugt 6 bis 10 Gewichtsteile Klebrigmacher (bezogen auf die Masse der getrockneten Polymerdispersion).

5. Klebeband nach zumindest einem der vorherigen Ansprüche,
**dadurch gekennzeichnet, dass**
der Haftklebemasse keinerlei Klebharze zugesetzt werden.

6. Klebeband nach zumindest einem der vorherigen Ansprüche,
**dadurch gekennzeichnet, dass**
die Glasübergangstemperatur der Haftklebemasse unterhalb von +15 °C (ermittelt mit DSC (Differential Scanning Calorimetry) gemäß DIN 53 765 bei einer Aufheizrate von 10 K/min) liegt.

7. Klebeband nach zumindest einem der vorherigen Ansprüche,
**dadurch gekennzeichnet, dass**
die Haftklebemasse nach ASTM D3330 eine Klebkraft auf Stahl von mindestens 2,0 N/cm aufweist (bei einem Flächengewicht der Klebmasse von 100 g/$m^2$ auf Polyestergewebe als Träger).

8. Klebeband nach zumindest einem der vorherigen Ansprüche,
**dadurch gekennzeichnet, dass**
der Träger ein Vliesmaterial oder ein Gewebe, insbesondere ein Polyestergewebe ist.

9. Klebeband nach zumindest einem der vorherigen Ansprüche,
**dadurch gekennzeichnet, dass**
der Träger ein Gewebe, vorzugsweise ein Polyestergewebe ist und weiter vorzugsweise aufgebaut ist wie folgt:

- die Fadenzahl in der Kette 10 bis 60/cm beträgt
- die Fadenzahl im Schuss 10 bis 40/cm beträgt
- die Kettfäden ein Garngewicht zwischen 40 und 400 dtex, insbesondere zwischen 44 und 330 dtex, besonders bevorzugt von 167 dtex besitzen
- die Schussfäden ein Garngewicht zwischen 40 und 660 dtex, insbesondere zwischen 44 und 400 dtex, besonders bevorzugt von 167 dtex besitzen

10. Klebeband nach zumindest einem der vorherigen Ansprüche,
**dadurch gekennzeichnet, dass**
der textile Träger, vorzugsweise ein Vlies, unterseitig mit einer aufgebrachten Folie (Folie zwischen Vlies und Klebemasse) versehen ist.

11. Verwendung eines Klebebandes nach zumindest einem der vorherigen Ansprüche zum Ummanteln von langgestrecktem Gut, wobei das Klebeband in einer Schraubenlinie um das langgestreckte Gut geführt wird.

12. Verwendung eines Klebebandes nach zumindest einem der vorherigen Ansprüche zum Ummanteln von langgestrecktem Gut, wobei das langgestreckte Gut in axialer Richtung von dem Band umhüllt wird.

13. Langgestrecktes Gut, wie insbesondere ein Kabelsatz, ummantelt mit einem Klebeband nach zumindest einem der vorherigen Ansprüche.

## Claims

1. Adhesive tape in particular for wrapping cables, consisting of a textile carrier and of a pressure sensitive adhesive, applied on at least one side of the carrier, in the form of a dried polymer dispersion, the polymer consisting of:

    (a) 98.0 to 99.0 wt% of n-butyl acrylate and/or 2-ethylhexyl acrylate
    (b) 1.0 to 2.0 wt% of an ethylenically unsaturated monomer having an acid or acid-anhydride function.

2. Adhesive tape according to Claim 1,
**characterized in that**
n-butyl acrylate forms monomer (a).

3. Adhesive tape according to at least one of the preceding claims,
**characterized in that**
acrylic acid, methacrylic acid, itaconic acid, maleic acid, fumaric acid and/or maleic anhydride form the monomer (b), preferably acrylic acid or methacrylic acid or the mixture of both.

4. Adhesive tape according to at least one of the preceding claims,
**characterized in that**
the adhesive is admixed with up to 15 parts by weight, or 5 to 15 parts by weight, of tackifier (based on the mass of the dried polymer dispersion), preferably 5 to 12, more preferably 6 to 10 parts by weight of tackifier (based on the mass of the dried polymer dispersion).

5. Adhesive tape according to at least one of the preceding claims,
**characterized in that**
no tackifying resins at all are added to the pressure sensitive adhesive.

6. Adhesive tape according to at least one of the preceding claims,
**characterized in that**
the glass transition temperature of the pressure sensitive adhesive is below +15°C (determined by DSC (Differential Scanning Calorimetry) in accordance with DIN 53 765 at a heating rate of 10 K/min).

7. Adhesive tape according to at least one of the preceding claims,
**characterized in that**
the pressure sensitive adhesive has a peel adhesion on steel of at least 2.0 N/cm according to ASTM D3330 (at a weight per unit area of the adhesive of 100 $g/m^2$ on woven polyester fabric as carrier).

8. Adhesive tape according to at least one of the preceding claims,
**characterized in that**
the carrier is a nonwoven material or a woven fabric, more particularly a woven polyester fabric.

9. Adhesive tape according to at least one of the preceding claims,
**characterized in that**
the carrier is a woven fabric, preferably a woven polyester fabric, and more preferably has a construction as follows:

    • the thread count in the warp is 10 to 60/cm
    • the thread count in the weft is 10 to 40/cm
    • the warp threads possess a yarn weight of between 40 and 400 dtex, more particularly between 44 and 330 dtex, very preferably of 167 dtex
    • the weft threads possess a yarn weight of between 40 and 660 dtex, more preferably between 44 and 400 dtex, very preferably of 167 dtex.

10. Adhesive tape according to at least one of the preceding claims,
**characterized in that**

the textile carrier, preferably a woven, has been provided on the underside with an applied film (film between nonwoven and adhesive).

**11.** Use of an adhesive tape according to at least one of the preceding claims for jacketing an elongate item, the adhesive tape being led in a helical line around the elongate item.

**12.** Use of an adhesive tape according to at least one of the preceding claims for jacketing an elongate item, the elongate item being enveloped in the axial direction by the tape.

**13.** Elongate item, such as in particular a cable loom, jacketed with an adhesive tape according to at least one of the preceding claims.

**Revendications**

**1.** Ruban adhésif, en particulier pour le rubanage de câbles, constitué d'un support textile et d'une masse d'adhésif de contact appliquée au moins sur une face du support, sous forme d'une dispersion polymère séchée, le polymère étant constitué de :

(a) 98,0 à 99,0 % en poids d'acrylate de n-butyle et/ou d'acrylate de 2-éthylhexyle
(b) 1,0 à 2,0 % en poids d'un monomère à insaturation éthylénique ayant une fonction acide ou anhydride d'acide.

**2.** Ruban adhésif selon la revendication 1, **caractérisé en ce que** l'acrylate de n-butyle forme le monomère (a).

**3.** Ruban adhésif selon au moins l'une des revendications précédentes, **caractérisé en ce que** l'acide acrylique, l'acide méthacrylique, l'acide itaconique, l'acide maléique, l'acide fumarique et/ou l'anhydride maléique forment le monomère (b), de préférence l'acide acrylique ou l'acide méthacrylique ou le mélange des deux.

**4.** Ruban adhésif selon au moins l'une des revendications précédentes, **caractérisé en ce qu'**on ajoute à la masse adhésive jusqu'à 15 parties en poids, ou encore 5 à 15 parties en poids d'un agent de pégosité (par rapport à la masse de la dispersion polymère séchée), de préférence 5 à 12, plus préférentiellement 6 à 10 parties en poids d'un agent de pégosité (par rapport à la masse de la dispersion polymère séchée).

**5.** Ruban adhésif selon au moins l'une des revendications précédentes, **caractérisé en ce qu'**aucune résine adhésive n'est ajoutée à la masse d'adhésif de contact.

**6.** Ruban adhésif selon au moins l'une des revendications précédentes, **caractérisé en ce que** la température de transition vitreuse de la masse d'adhésif de contact est inférieure à +15 °C (déterminée par ACD (analyse calorimétrique différentielle) selon DIN 53 765 pour une vitesse de montée en température de 10 K/min).

**7.** Ruban adhésif selon au moins l'une des revendications précédentes, **caractérisé en ce que** la masse d'adhésif de contact présente selon ASTM D3330 une force d'adhérence sur acier d'au moins 2,0 N/cm (pour une masse surfacique de la masse adhésive de 100 g/m$^2$, sur un tissu de polyester servant de support).

**8.** Ruban adhésif selon au moins l'une des revendications précédentes, **caractérisé en ce que** le support est un matériau non tissé ou un tissu, en particulier un tissu de polyester.

**9.** Ruban adhésif selon au moins l'une des revendications précédentes, **caractérisé en ce que** le support est un tissu, de préférence un tissu de polyester, et est en outre de préférence constitué comme suit :

• le nombre de fils de chaîne est de 10 à 60/cm
• le nombre de fils de trame est de 10 à 40/cm
• les fils de chaîne ont un titre entre 40 et 400 dtex, en particulier entre 44 et 330 dtex, d'une manière particulièrement préférée de 167 dtex
• les fils de trame ont un titre entre 40 et 660 dtex, en particulier entre 44 et 400 dtex, d'une manière particulièrement préférée de 167 dtex.

**10.** Ruban adhésif selon au moins l'une des revendications précédentes, **caractérisé en ce que** le support textile, de

préférence un non-tissé, est pourvu sur sa face inférieure d'une feuille appliquée (feuille entre le non-tissé et la masse adhésive).

11. Utilisation d'un ruban adhésif selon au moins l'une des revendications précédentes pour gainer un article de grande longueur, le ruban adhésif étant guidé autour de l'article de grande longueur selon une ligne hélicoïdale.

12. Utilisation d'un ruban adhésif selon au moins l'une des revendications précédentes pour gainer un article de grande longueur, l'article de grande longueur étant enveloppé du ruban dans la direction axiale.

13. Objet de grande longueur, tel en particulier qu'un harnais de câbles, gainé d'un ruban adhésif selon au moins l'une des revendications précédentes.

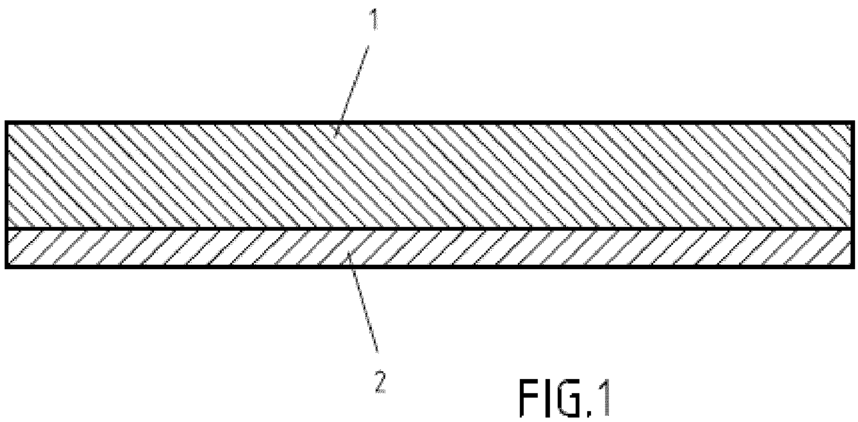


FIG.1

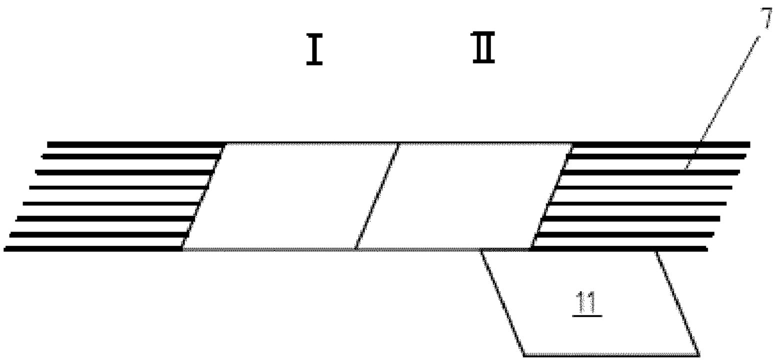


FIG.2

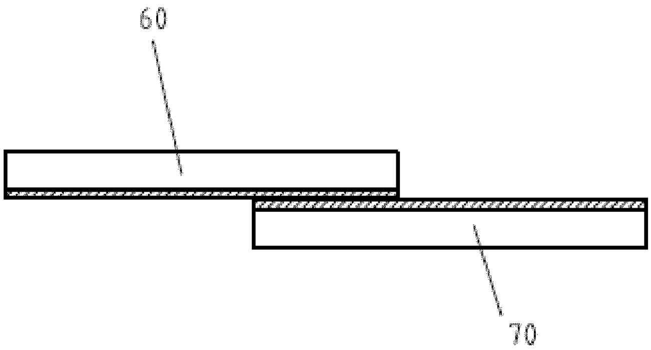


FIG.3

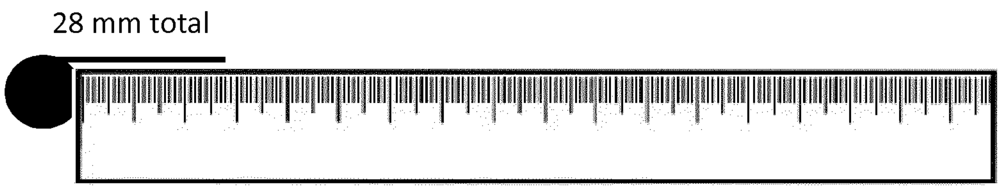


Fig. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2520628 A1
- EP 2522705 A1
- JP 2015209446 A
- EP 1378527 B1
- EP 0071212 B1
- EP 1448744 A1
- EP 1312097 A1
- EP 1300452 A2
- DE 10229527 A1
- WO 2006108871 A1
- EP 1367608 A2
- EP 1315781 A1
- DE 10329994 A1


### In der Beschreibung aufgeführte Nicht-Patentliteratur


- Lovell and Mohamed S. El-Aasser. **PETER A.** Emulsion Polymerization and Emulsion Polymers. Wiley-VCH, 1997
- **T.G. FOX.** *Bull. Am. Phys. Soc.,* 1956, vol. 1, 123
- Arbeitgeberkreis Gesamttextil. Textiltechnik-Vliesstofferzeugung. Georg Thieme Verlag, 1982